# EUROPEAN PATENT APPLICATION

(11) **EP 3 094 040 A1**
(43) Date of publication of application: **16.11.2016**
(21) Application number: 15734848.3
(22) Date of filing: 05.01.2015
(51) Int. Cl.: H04L 9/32, G06F 21/44, H04L 9/08

(54) **COMMUNICATION DEVICE**

(30) Priority: 10.01.2014 JP 2014003547
(71) Applicant: Panasonic Intellectual Property Management Co., Ltd., Osaka-shi, Osaka 540-6207 (JP)
(72) Inventor: MASUDA, Yoichi, Osaka-shi Osaka 540-6207 (JP); YASU, Kenji, Osaka-shi Osaka 540-6207 (JP); FUKUDA, Naohiro, Osaka-shi Osaka 540-6207 (JP); TAKAZOE, Tomoki, Osaka-shi Osaka 540-6207 (JP); KURAMAE, Kenji, Osaka-shi Osaka 540-6207 (JP)
(74) Representative: Appelt, Christian W.
(86) International application number: PCT/IB2015/000005
(87) International publication number: WO 2015/104628

(57) **Abstract**

A communication device (1) provided with: a condition assessment unit (11) which, when not connected to a server (3) that issued a certificate (25) to a target device (2), assesses whether the certificate (25) satisfies prescribed conditions; provisional authorization unit (12) which, when the certificate (25) has been determined to satisfy the prescribed conditions, sets prescribed access restrictions for the target device (2), and authorizes a connection; a validity confirmation unit (13) which, when connected to the server (3), confirms the validity of the certificate (25) with the server (3); and a full authorization unit (14) which, when the certificate (25) has been confirmed to be valid, removes the access restrictions for the target device (2) and authorizes a connection.

## Description

### Technical Field

The present invention relates to a communication device that is authenticated with a target device, an authentication system, an authentication method, an authentication program, and a storage medium.

### Background Art

There is known a technique for performing mutual authentication between devices by using an electronic certificate issued by a server serving as an authentication center. In an authentication system using such a technique, the device acquires an invalidation list of the electronic certificate from the server, thereby preventing connection with an illegal device having an invalidated electronic certificate (see Japanese Unexamined Patent Application Publication No. 2006-217160).

However, in the case of providing the authentication system in an environment, e.g., a newly-built house or the like, which is not connected to an external network, authentication of a device may be needed in a state where there is no connection to the server. A device that cannot acquire an invalidation list may be connected to an unauthorized device having no valid certificate. Further, when a device is connected to the server via an unreliable device, an invalidation list may be falsify by the unreliable device.

### Summary of the Invention

In view of the above, the present invention provides a communication device that can be installed in an environment that is not connected to a server and can restrict access of an unreliable device, an authentication system, an authentication method, an authentication program, and a storage medium.

In accordance with a first aspect of the present invention, there is provided a communication device including: a condition determining unit configured to determine, when there is no connection to a server that has issued a certificate to a target device, whether or not the certificate of the target device satisfies a predetermined condition; a tentative permission unit configured to allow, when it is determined by the condition determining unit that the certificate satisfies the predetermined condition, the target device to access the communication device with setting an access restriction; a validity checking unit configured to check, when there is connection to the server, validity of the certificate through the server; and a confirmative permission unit configured to allow, when it is checked by the validity checking unit that the certificate is valid, the target device to access the communication device with releasing the access restriction.

Thee validity checking unit may have an encryption request unit configured to request the server to encrypt a message to be transmitted from the server to the communication device.

The validity checking unit may have an update request unit configured to request the target device to update the certificate.

In accordance with a second aspect of the present invention, there is provided an authentication system including: a communication device;
a target device connected to the communication device; and
a server configured to issue a certificate to the target device,
wherein the communication device includes:
a condition determining unit configured to determine, when the communication device is not connected to the server, whether or not the certificate satisfies a predetermined condition;
a tentative permission unit configured to allow, when it is determined by the condition determining unit that the certificate satisfies the predetermined condition, the target device to access the communication device with setting an access restriction;
a validity checking unit configured to check, when there is connection to the server, validity of the certificate through the server; and
a confirmative permission unit configured to allow, when it is checked by the validity checking unit that the certificate is valid, the target device to access the communication device with releasing the access restriction.

The validity checking unit may have an encryption request unit configured to request the server to encrypt a message to be transmitted from the server to the communication device, and wherein the server may have an encryption processing unit configured to encrypt a message to be transmitted to the communication device in response to the request of the encryption request unit.

The validity checking unit may have an update request unit configured to request the target device to update the certificate, and wherein the target device may have an update processing unit configured to request the server to update the certificate in response to the request of the update request unit.

The server may have a certificate invalidation list indicating one or more invalid certificates and reissues a new certificate having reissue time in response to the request of the update processing unit when the certificate of the target device is not included in the invalidation list, and wherein the validity checking unit may check validity of the new certificate by comparing request time of the update request unit with the reissue time.

In accordance with a third aspect of the present invention, there is provided an authentication method including: determining, when a communication device is not connected to a server that has issued a certificate to a target device connected to the communication device, whether or not the certificate satisfies a predetermined condition; allowing, when it is determined that the certificate satisfies the predetermined condition, the target device to access the communication device with setting an access restriction; checking, when the communication device is connected to the server, validity of the certificate through the server; allowing, when it is checked that the certificate is valid, the target device to access the communication device with releasing the access restriction.

In accordance with a fourth aspect of the present invention, there is provided an authentication program for executing on a computer processes including: determining, when a communication device is not connected to a server that has issued a certificate to a target device connected to the communication device, whether or not the certificate satisfies a predetermined condition; allowing, when it is determined that the certificate satisfies the predetermined condition, the target device to access the communication device with setting an access restriction; checking, when the communication device is connected to the server, validity of the certificate through the server; allowing, when it is checked that the certificate is valid, the target device to access the communication device with releasing the access restriction.

In accordance with a fifth aspect of the present invention, there is provided a computer-readable storage medium storing a program for executing on a computer processes including: determining, when a communication device is not connected to a server that has issued a certificate to a target device connected to the communication device, whether or not the certificate satisfies a predetermined condition; allowing, when it is determined that the certificate satisfies the predetermined condition, the target device to access the communication device with setting an access restriction; checking, when the communication device is connected to the server, validity of the certificate through the server; allowing, when it is checked that the certificate is valid, the target device to access the communication device with releasing the access restriction.

### Brief Description of the Drawings

The figures depict one or more implementations in accordance with the present teaching, by way of example only, no by way of limitations. In the figures, like reference numerals refer to the same or similar elements.
Fig. 1 is a block diagram for explaining a basic configuration of an authentication system according to a first embodiment;
Fig. 2 is a flowchart for explaining an operation of a communication device of the authentication system according to the first embodiment;
Fig. 3 is a sequence diagram for explaining an operation of the authentication system according to the first embodiment;
Fig. 4 is a block diagram for explaining a basic configuration of an authentication system according to a second embodiment;
Fig. 5 is a sequence diagram for explaining an operation of the authentication system according to the second embodiment;
Fig. 6 is a block diagram for explaining a basic configuration of an authentication system according to a

### third embodiment; and

Fig. 7 is a sequence diagram for explaining an operation of the authentication system according to the third embodiment.

### Detailed Description

Hereinafter, a first to a third embodiment of the disclosure will be described with reference to the accompanying drawings. Throughout the drawings, like or similar reference numerals will be used for like or similar parts and redundant description thereof will be omitted. The following embodiments illustrate an apparatus or a method for embodying a technical concept of the disclosure, and the disclosure is not limited to the apparatus or the method illustrated in the following embodiments. The technical concept of the disclosure may be variously modified within a technical scope of the claims.

### (First embodiment)

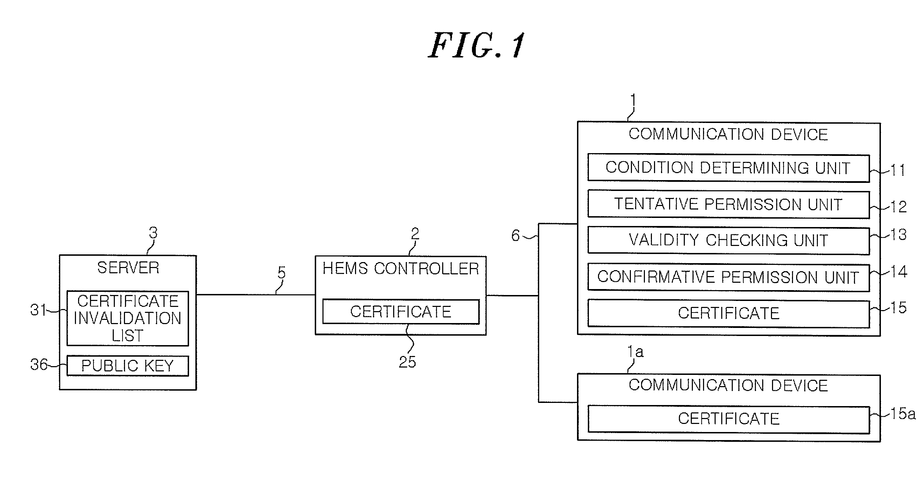

As shown in Fig. 1, an authentication system according to a first embodiment includes a communication device 1, a home energy management system (HEMS) controller 2 that is communicatively connected to the communication device 1 via an internal network 6, and a server 3 that is communicatively connected to the HEMS controller 2 via an external network 5.

The internal network 6 includes a local communication network, e.g., a HAN (Home Area Network) or the like. The internal network 6 may be connected to one or more communication devices 1a, in addition to the communication device 1 and the HEMS controller 2. The internal network 6 is communicatively connected between the HEMS controller 2 and the communication devices 1 and 1a, thereby constituting a HEMS. The internal network 6 may be wired or wireless.

The external network 5 is a wide area communication network, e.g., the Internet or the like. The server 3 is an authentication center for issuing an electronic certificate such as a public key certificate or the like to the communication devices 1 and 1a and the HEMS controller 2 and managing the issued electronic certificate. The server 3 issues certificates 15, 15a and 25 that are public key certificates to the communication devices 1 and 1a and the HEMS controller 2, respectively. The certificates 15, 15a and 25 include digital signatures given by the server 3. The server 3 further has a certificate invalidation list 31 that is a list of invalidated public key certificates.

The HEMS controller 2 acquires and manages operation states of the communication devices 1 and 1a while being connected to the communication devices 1 and 1a constituting the HEMS, and controls the operations of the communication devices 1 and 1a. The HEMS controller 2 and the communication devices 1 and 1a establish connection therebetween by mutually authenticating. The HEMS controller 2 is connected to the server 3 via the external network 5 and thus can relay the communication between the communication devices 1 and 1a and the server 3. Here, the communication devices 1 and 1a may communicate with the server 3 directly or via another communication device other than the HEMS controller 2.

The communication device 1 is a device, e.g., an air conditioner, an induction hob (IH) cooker, a solar cell module, a distribution board, or the like, which can communicate with the HEMS controller 2. The communication device 1 includes a condition determining unit 11, a tentative permission unit 12, a validity checking unit 13, and a confirmative permission unit 14. The communication device 1 can perform mutual authentication with the HEMS controller 2 and the communication device 1a via the internal network 6. Hereinafter, an example' in which the HEMS controller 2 is a device for mutual authentication with the communication device 1 will be described.

The condition determining unit 11 receives the certificate 25 from the HEMS controller 2 and determines whether or not a predetermined condition is satisfied by the certificate 25 when the internal network 6 is not communicatively connected to the external network 5, i.e., when the communication device 1 is not communicatively connected to the server 3.

When it is determined by the condition determining unit 11 that the certificate 25 satisfies a predetermined condition, it is assumed that tentative authentication for the HEMS controller 2 is successful and the tentative permission unit 12 allows the HEMS controller 2 to access the communication device 1 with setting an access restriction.

The validity checking unit 13 checks the validity of the certificate 25 by using the server 3 when the internal network 6 is communicatively connected to the external network 5, i.e., when the communication device 1 is communicatively connected to the server 3.

When it is checked by the validity checking unit 13 that the certificate 25 is valid, it is assumed that the authentication for the HEMS controller 2 is successful and the confirmative permission unit 14 allows connection between the HEMS controller 2 and the communication device 1 by releasing the access restriction set by the tentative permission unit 12.

### (Operation of communication device)

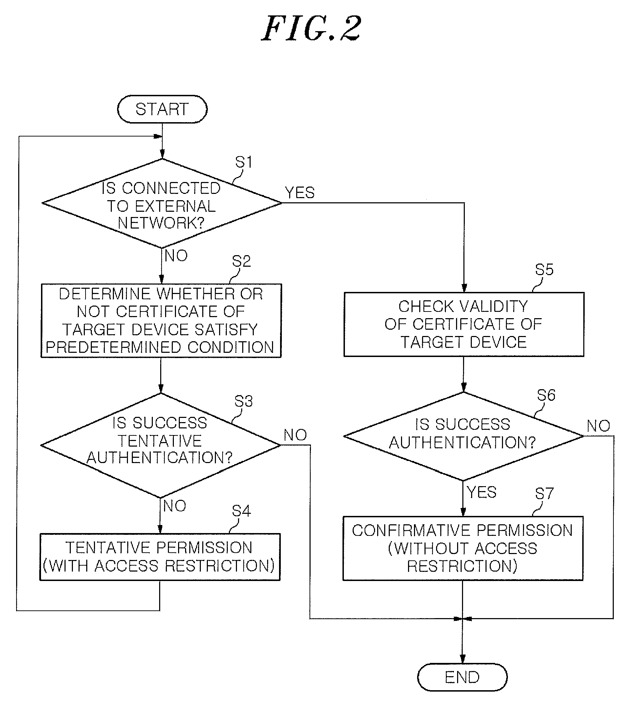

An exemplary operation of the communication device 1 of the authentication system according to the first embodiment will be described with reference to the flowchart shown in Fig. 2.

First, in a step S1, the condition determining unit 11 determines whether or not the internal network 6 that is a HEMS is connected to the external network 5 and the communication device 1 is communicatively connected to the server 3. When it is determined that the communication device 1 is not communicatively connected to the server 3, the condition determining unit 11 proceeds to a step S2. When it is determined that the communication device 1 is communicatively connected to the server 3, the condition determining unit 11 proceeds to a step S5.

In the step S2, the condition determining unit 11 requests the HEMS controller 2 of the certificate 25 and acquires the certificate 25 from the HEMS controller 2. The condition determining unit 11 determines whether or not the certificate 25 satisfies a predetermined condition by verifying the acquired certificate 25. The predetermined condition determined by the condition determining unit 11 includes a condition that the certificate 25 is not counterfeit, a condition that the term of validity of the certificate 25, if exists, is not expired, and the like. The communication device 1 is allowed to have tentative connection to the HEMS controller 2 having the certificate 25 that satisfies the predetermined condition but whose validity cannot be verified currently.

When it is determined in the step S2 that the certificate 25 satisfies the predetermined condition, the tentative permission unit 12 assumes that the tentative authentication for the HEMS controller 2 is successful in a step S3 (step S3: YES), and the processing proceeds to a step S4. On the other hand, when it is determined in the step S2 that the certificate 25 does not satisfy the predetermined condition, the tentative permission unit 12 assumes that the tentative authentication for the HEMS controller 2 has failed (step S3: NO). Accordingly, the access is not allowed and the processing is terminated.

In a step S4, the tentative permission unit 12 allows the connection between the HEMS controller 2 and the communication device 1 with setting an access restriction. The access restriction set by the tentative permission unit 12 includes the restriction of the control range of the HEMS controller 2, e.g., allowing only acquisition of information on the communication device 1 such as an operation state of the communication device 1 or the like and restricting control for changing the operation state of the communication device 1 or the like. In addition, the access restriction may include the setting of the term of validity in which the access by the HEMS controller 2 is permitted or the setting of the number of accesses on a control type basis. Further, the access restriction may include the restriction of access from the HEMS controller 2.

The tentative permission unit 12 allows the HEMS controller 2 to have only minimum access required to install the HEMS. The operation state of the communication device 1 may be, e.g., a power state, power consumption and a set temperature of an air conditioner, or generated energy of a solar cell module. The tentative permission unit 12 returns the processing to the step S1 after the step S4.

When it is determined in the step S1 that the communication device 1 is communicatively connected to the server 3, the validity checking unit 13 verifies the certificate 25 and then checks the validity of the certificate 25 by the server 3 in a step S5. If the certificate 25 has been already verified by the tentative authentication, it is possible to omit the process of verifying the certificate 25.

When it is checked in the step S5 that the certificate 25 is valid, the confirmative permission unit 14 assumes that the authentication for the HEMS controller 2 is successful in a step S6 (step S6: YES), and the processing proceeds to a step S7. On the other hand, when it is checked in the step S5 that the certificate 25 is invalid, the confirmative permission unit 14 assumes that the authentication for the HEMS controller 2 has failed (step S6: NO). Then, the access is restricted and the processing is completed.

In a step S7, the confirmative permission unit 14 allows the communication with the communication device 1 by releasing the access restriction set in the step S4 for the HEMS controller 2 by the tentative permission unit 12, and the processing is completed.

### (Authentication method)

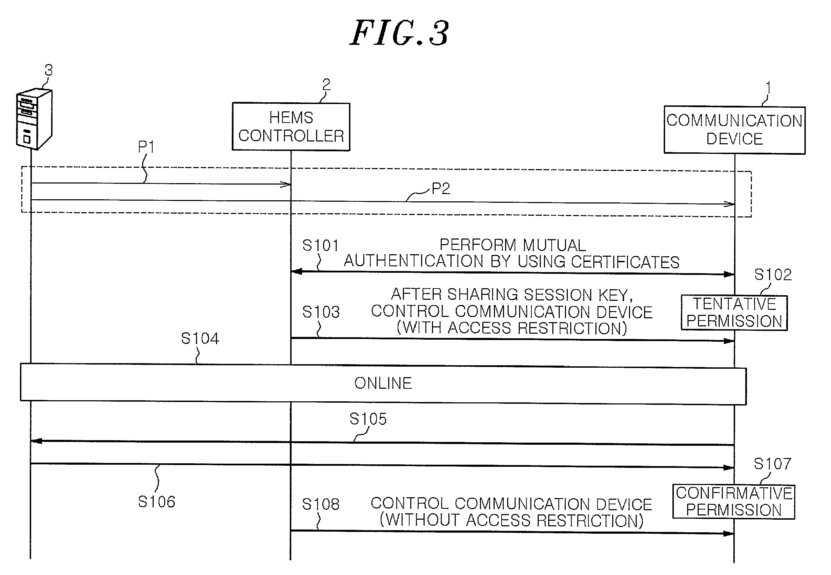

An exemplary operation of the authentication system according to the first embodiment will be described with reference to the sequence diagram shown in Fig. 3. The server 3 serving as an authentication center issues the certificates 15 and 25 for the communication device 1 and the HEMS controller 2 in steps P1 and P2, respectively. The certificates 15 and 25 are issued together with the public key 36 of the server 3. The steps P1 and P2 may be performed, e.g., in the factory shipment of the communication device 1 and the HEMS controller 2.

First, when the communication device 1 and the HEMS controller 2 are connected to the internal network 6 in the environment that is not connected to the external network 5, the communication device 1 and the HEMS controller 2 perform mutual authentication by using the certificates 15 and 25 in the step S101. For example, the condition determining unit 11 of the communication device 1 and the HEMS controller 2 respectively receive the certificates 25 and 15, verify the digital signatures of the received certificates 25 and 15, and verify that the certificates 25 and 15 have been issued by the server 3. If the contents of the certificates 25 and 15 do not satisfy predetermined conditions, it is assumed that the authentication has failed. Further, the condition determining unit 11 of the communication device 1 and the HEMS controller 2 verify whether or not the authentication target has a private key corresponding to the received certificate 25 or 15. The mutual authentication can be performed when it is checked that the authentication target has a pair of a normal private key certificate and a normal public key certificate issued by the server 3.

When the mutual authentication is successful in the step S101, it is assumed that the tentative authentication for the HEMS controller 2 is successful and the tentative permission unit 12 of the communication device 1 allows the access of the HEMS controller 2 with an access restriction in the step S102. When the mutual authentication is performed in the step S101, the communication device 1 and the HEMS controller 2 can share a session key (common private key) by exchanging keys by using public key encryption, for example. The communication device 1 and the HEMS controller 2 may encrypt contents of the communication therebetween by using the shared session key. Further, the communication message preferably has a message authentication code created by using the session key to detect any alteration.

In a step S103, the HEMS controller 2 can control the communication device 1 within a predetermined access restriction range.

In a step S104, the communication device 1 and the HEMS controller 2 are connected to the server 3 via the external network 5. In a step S105, the validity checking unit 13 of the communication device 1 is connected to the server 3 and transmits to the server 3 a message that requests the certificate invalidation list 31.

In a step S106, the server 3 transmits the certificate invalidation list 31 to the communication device 1 in response to the message transmitted from the communication device 1 in the step S105. The validity checking unit 13 checks the validity of the certificate 25 by comparing the certificate invalidation list 31 transmitted in the step S106 and the certificate 25 of the HEMS controller 2. When the certificate 25 is not included in the certificate invalidation list 31, the validity checking unit 13 checks that the certificate 25 is valid.

Or, in the step S105, the validity checking unit 13 may transmit to the server 3 a message that inquires the validity of the certificate 25. The server 3 may transmit to the communication device 1 the message indicating whether or not the certificate 25 is valid in response to the inquiry of the validity checking unit 13. In that case, the traffic of the communication device 1 in the internal network 6 and the external network 5 can be reduced compared to the case of requesting and receiving the certificate invalidation list 31. However, for example, when there are a plurality of authentication target devices, the traffic may be reduced by acquiring the certificate invalidation list 31 once and referring to the acquired certificate invalidation list 31 for each target device. Therefore, the operation of the validity checking unit 13 may be changed by the topology of the authentication system. Further, the validity checking unit 13 may transmit to the server 3 a message that requests transmission of only a part of the certificate invalidation list 31 which corresponds to the internal network 6 to the communication device 1.

When it is checked by the validity checking unit 13 that the certificate 25 is valid, the confirmative permission unit 14 assumes that the authentication for the HEMS controller 2 is successful in a step S107. Since the authentication for the HEMS controller 2 is successful, the confirmative permission unit 14 allows the HEMS controller 2 to access the communication device 1 with releasing the access restriction that has been set for the HEMS controller 2 by the tentative permission unit 12.

In a step S108, the HEMS controller 2 can control the communication device 1 without any access restriction.

The authentication system according to the first embodiment can be easily installed even in an environment that is not connected to the external network 5 and can restrict access from a device that is not reliable due to counterfeit or the like.

### (Second embodiment)

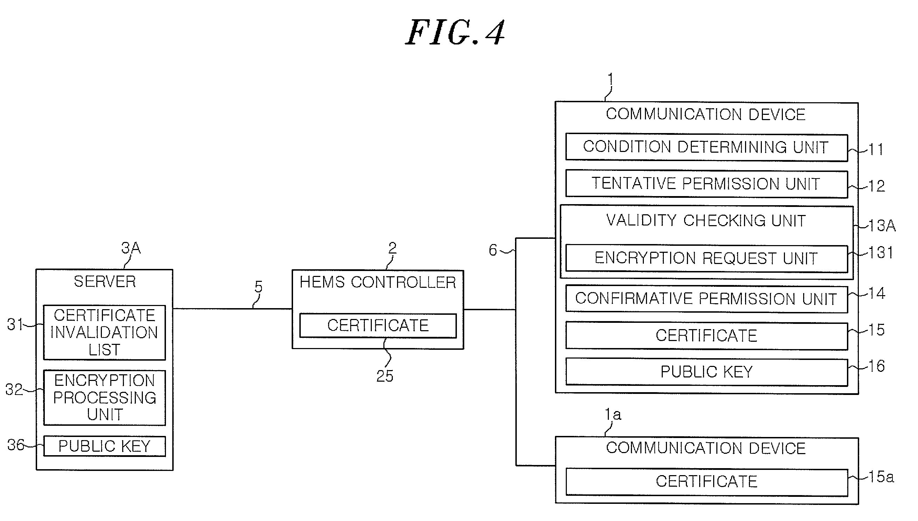

The authentication system according to the second embodiment is different from that according to the first embodiment in that the communication device 1 includes a validity checking unit 13A having an encryption request unit 131 and also that the server 3A includes an encryption processing unit 32, as shown in Fig. 4. In the second embodiment, the communication device 1 is connected to the server 3A via the HEMS controller 2 that is an authentication target device. Other configurations, operations and effects of the second embodiment are the same as those of the first embodiment. Therefore, redundant description thereof will be omitted.

The encryption request unit 131 transmits to the server 3A a message that requests the server 3A to encrypt the communication with the communication device 1 by using a public key 16 of the communication device 1. The public key 16 is associated with the certificate 15 and represents an encryption algorithm. The encryption processing unit 32 encrypts the communication with the communication device 1 in response to the request of the encryption request unit 131.

### (Authentication method)

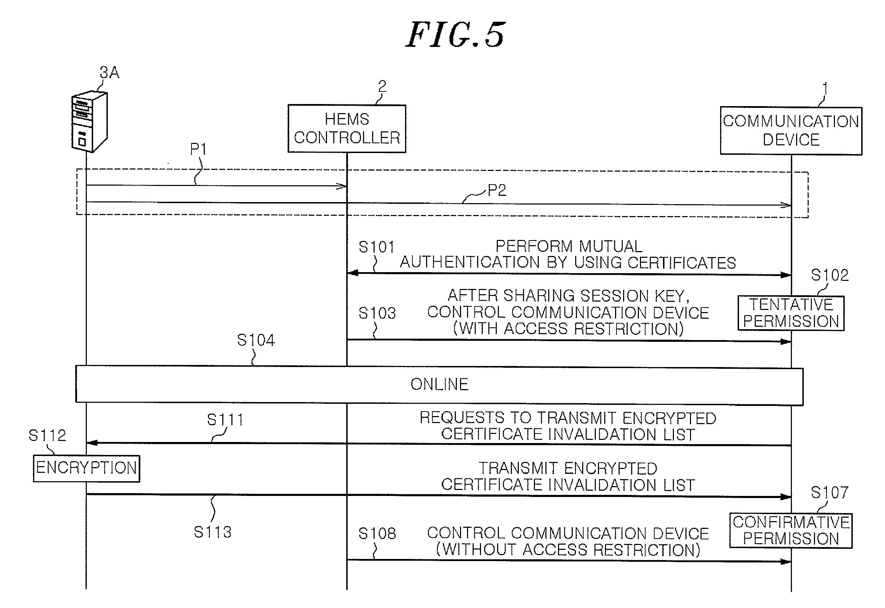

An exemplary operation of an authentication system according to the second embodiment will be described by using the sequence diagram shown in Fig. 5. The processes in the steps P1 and P2, the step S101 to S104 and the step S107 and S108 are substantially the same as those in the first embodiment.

In a step S111, the encryption request unit 131 of the validity checking unit 13A encrypts the message, which requests encryption of the certificate invalidation list 31 using the public key 16 and transmission of the encrypted list, by using the public key 36 of the server 3A and then transmits the encrypted message to the server 3A.

In a step S112, the encryption processing unit 32 decodes the message transmitted from the encryption request unit 131 by using a private key of the server 3A and encrypts a reply message including the certificate invalidation list 31 by using the public key 16 of the communication device 1 in response to the request of the encryption request unit 131.

In a step S113, the encryption processing unit 32 transmits the reply message including the encrypted certificate invalidation list 31 to the communication device 1. The validity checking unit 13A decodes the certificate invalidation list 31 transmitted in the step S113 by using a private key of the communication device 1. The validity checking unit 13A checks the validity of the certificate 25 by comparing the decoded certificate invalidation list 31 and the certificate 25. The validity checking unit 13A checks that the certificate 25 is valid when the certificate 25 is not included in the certificate invalidation list 31.

Or, in the step S111, the encryption request unit 131 may transmit to the server 3A a message that requests the server 3A to encrypt the message indicating whether or not the certificate 25 is valid by using the public key 16 and transmit the encrypted message. The encryption request unit 131 encrypts the message to be transmitted to the server 3A by using the public key 36. In this case, the server 3A may encrypt the message indicating whether or not the certificate 25 is valid in response to the request of the validity checking unit 13A by using the public key 16 in the step S112 and transmit the encrypted message to the communication device 1 in the step S113.

The encryption request unit 131 may transmit the request message having a different random value at each time in the step S111. In that case, the server 3A transmits the reply message having the same random value as that of the request message in the step S113. Accordingly, it is possible to deal with replay attack for hacking and copying the request message or the reply message.

The authentication system according to the second embodiment can be installed even in an environment that is not connected to the external network 5 and can restrict access to a device that is not reliable due to counterfeit or the like.

In the authentication system according to the second embodiment, the communication contents between the server 3A and the communication device 1 is encrypted by the encryption processing unit 32. Therefore, the authentication system according to the second embodiment can improve reliability and robustness of the authentication system by preventing alteration of the certificate invalidation list 31 by the authentication target device even when the authentication target device that relays the server 3A and the communication device 1 is not reliable.

### (Third embodiment)

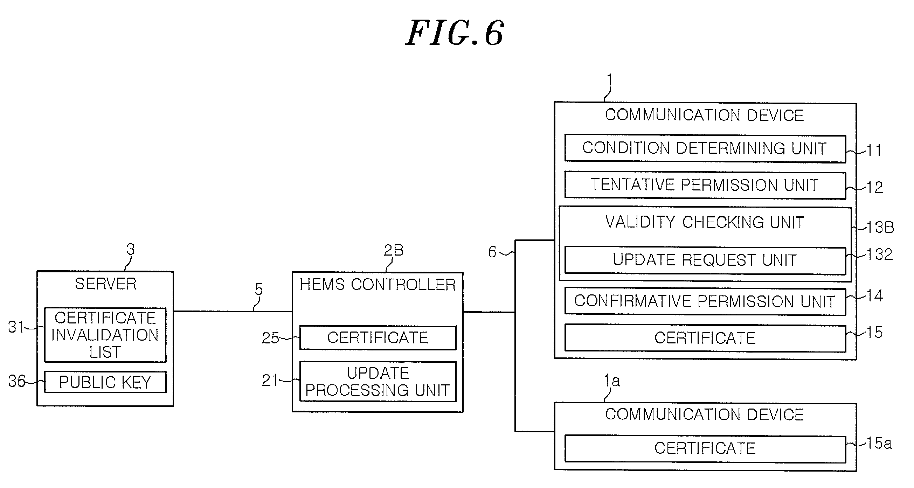

An authentication system according to a third embodiment is different from those of the first and the second embodiment in that the communication device 1 includes a validity checking unit 13B having an update request unit 132 and a HEMS controller 2B has an update processing unit 21, as shown in Fig. 6. In the third embodiment, the communication device 1 is connected to the server 3 via a HEMS controller 2B as an authentication target device. Other configurations, operations and effects of the third embodiment are substantially the same as those of the first and the second embodiment. Therefore, redundant description thereof will be omitted.

The update request unit 132 transmits the message that requests the HEMS controller 2B to update the certificate 25 when the validity thereof is not reliable. The update processing unit 21 updates the certificate 25 by the server 3 in response to the request of the update request unit 132.

### (Authentication method)

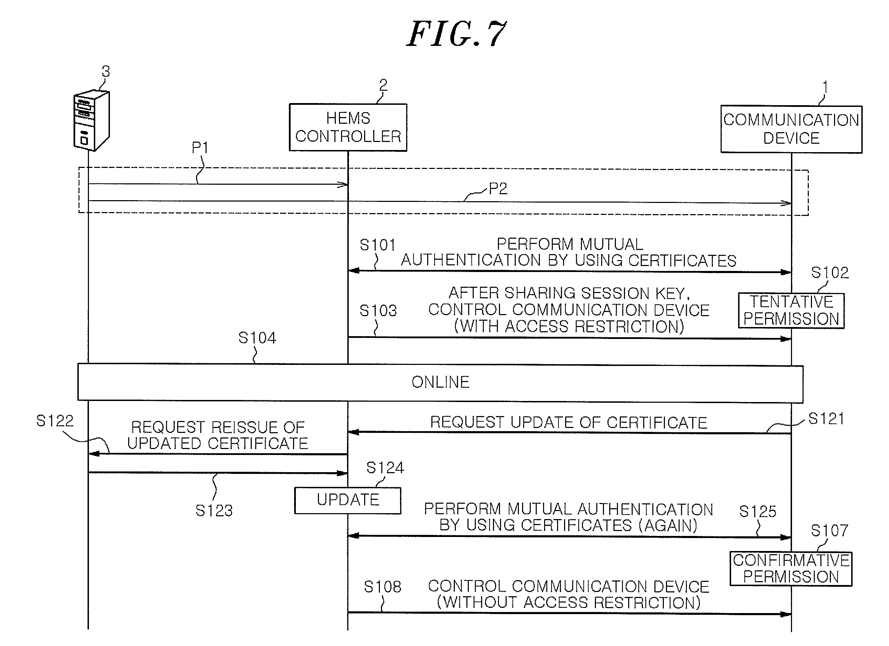

An example of the operation of the authentication system according to the third embodiment will be described with reference to the sequence diagram shown in Fig. 7. The processes in the steps P1 and P2, S101 to step S104, and steps S107 to step S108 are substantially the same as those in the first embodiment and the second embodiment.

In a step S121, the update request unit 132 of the validity checking unit 13B transmits a message that requests update of the certificate 25 to the HEMS controller 2B.

In a step S122, the update processing unit 21 of the HEMS controller 2B transmits a message that requests reissue of the certificate 25 in response to the request of the update request unit 132. The server 3 reissues a new certificate 25 including time information indicating reissue time, request time, or starting time of term of validity in response to the request of the update processing unit 21.

In a step S123, the server 3 transmits the reissued new certificate 25 to the HEMS controller 2B. In a step S124, the update processing unit 21 updates the certificate 25 by replacing the old certificate 25 with the new certificate 25 transmitted from the server 3.

In a step S125, the communication device 1 and the HEMS controller 2B perform mutual authentication by using the certificate 15 and the new certificate 25. The validity checking unit 13B checks the validity of the certificate 25 by comparing the time information included in the certificate 25 with the request time in the step S121. The validity checking unit 13B checks that the certificate 25 is valid when the time information of the certificate 25 is later than the request time in the step S121.

When the reissue of the certificate 25 is requested in the step S122, if the old certificate 25 of the HEMS controller 2B is invalid, the reissue of the certificate 25 by the server 3 does not occur and the certificate 25 is not updated. Therefore, the validity checking unit 13B can reliably check the validity of the reissued new certificate 25 by verifying the time information of the new certificate 25.

The authentication system according to the third embodiment can be easily installed even in an environment that is not connected to the external network 5 and can restrict access from a device that is not reliable due to counterfeit or the like.

In the authentication system according to the third embodiment, the authentication target device updates the certificate by the request of the update request unit 132. Therefore, the validity of the certificate of the authentication target device can be checked even when the authentication target device for relaying the server 3 and the communication device 1 is not reliable. Accordingly, the authentication system according to the third embodiment can improve the reliability and the robustness of the authentication system.

### (Other embodiments)

While the first embodiment to the third embodiment have been described, the invention is not limited by description and drawings forming a part of this disclosure. Various embodiments and operation techniques will be clearly understood by those skilled in the art from this disclosure.

For example, in the above-described first to the third embodiment, the respective functions of the communication devices 1 and 1a, the HEMS controller 2, and the server 3 can be realized by an authentication program to be executed in a computer. The authentication program may be stored in a computer-readable storage medium or may be acquired by a computer via a network.

In the above-described first to third embodiment, the validity checking units 13, 13A, or 13B may check the validity of the certificate 25 by the communication device 1a other than the HEMS controller 2 connected to the internal network 6. In this case, the communication device 1a may have the certificate invalidation list acquired in advance from the server 3 or 3A, a list indicating valid devices, or the like.

The present invention may include various embodiments, which are not described herein, such as a configuration in which the first to the third embodiment are applied to one another and the like. Therefore, the technical range of the invention is determined only by the invention specifying items according to the scope of claims reasonable from the above description.

## Claims

1. A communication device comprising:
a condition determining unit configured to determine, when there is no connection to a server that has issued a certificate to a target device, whether or not the certificate of the target device satisfies a predetermined condition;
a tentative permission unit configured to allow, when it is determined by the condition determining unit that the certificate satisfies the predetermined condition, the target device to access the communication device with setting an access restriction;
a validity checking unit configured to check, when there is connection to the server, validity of the certificate through the server; and
a confirmative permission unit configured to allow, when it is checked by the validity checking unit that the certificate is valid, the target device to access the communication device with releasing the access restriction.

2. The communication device of claim 1, wherein the validity checking unit has an encryption request unit configured to request the server to encrypt a message to be transmitted from the server to the communication device.

3. The communication device of claim 1 or 2, wherein the validity checking unit has an update request unit configured to request the target device to update the certificate.

4. An authentication system comprising:
a communication device;
a target device connected to the communication device; and
a server configured to issue a certificate to the target device,
wherein the communication device includes:
a condition determining unit configured to determine, when the communication device is not connected to the server, whether or not the certificate satisfies a predetermined condition;
a tentative permission unit configured to allow, when it is determined by the condition determining unit that the certificate satisfies the predetermined condition, the target device to access the communication device with setting an access restriction;
a validity checking unit configured to check, when there is connection to the server, validity of the certificate through the server; and
a confirmative permission unit configured to allow, when it is checked by the validity checking unit that the certificate is valid, the target device to access the communication device with releasing the access restriction.

5. The authentication system of claim 4, wherein the validity checking unit has an encryption request unit configured to request the server to encrypt a message to be transmitted from the server to the communication device, and
wherein the server has an encryption processing unit configured to encrypt a message to be transmitted to the communication device in response to the request of the encryption request unit.

6. The authentication system of claim 4 or 5, wherein the validity checking unit has an update request unit configured to request the target device to update the certificate, and
wherein the target device has an update processing unit configured to request the server to update the certificate in response to the request of the update request unit.

7. The authentication system of claim 6, wherein the server has a certificate invalidation list indicating one or more invalid certificates and reissues a new certificate having reissue time in response to the request of the update processing unit when the certificate of the target device is not included in the invalidation list, and
wherein the validity checking unit checks validity of the new certificate by comparing request time of the update request unit with the reissue time.

8. An authentication method comprising:
determining, when a communication device is not connected to a server that has issued a certificate to a target device connected to the communication device, whether or not the certificate satisfies a predetermined condition;
allowing, when it is determined that the certificate satisfies the predetermined condition, the target device to access the communication device with setting an access restriction;
checking, when the communication device is connected to the server, validity of the certificate through the server;
allowing, when it is checked that the certificate is valid, the target device to access the communication device with releasing the access restriction.

9. An authentication program for executing on a computer processes including:
determining, when a communication device is not connected to a server that has issued a certificate to a target device connected to the communication device, whether or not the certificate satisfies a predetermined condition;
allowing, when it is determined that the certificate satisfies the predetermined condition, the target device to access the communication device with setting an access restriction;
checking, when the communication device is connected to the server, validity of the certificate through the server;
allowing, when it is checked that the certificate is valid, the target device to access the communication device with releasing the access restriction.

10. A computer-readable storage medium storing a program for executing on a computer processes including:
determining, when a communication device is not connected to a server that has issued a certificate to a target device connected to the communication device, whether or not the certificate satisfies a predetermined condition;
allowing, when it is determined that the certificate satisfies the predetermined condition, the target device to access the communication device with setting an access restriction;
checking, when the communication device is connected to the server, validity of the certificate through the server;
allowing, when it is checked that the certificate is valid, the target device to access the communication device with releasing the access restriction.
